# EUROPÄISCHE PATENTSCHRIFT

(11) **EP 3 638 017 B1**
(45) Veröffentlichungstag und Bekanntmachung des Hinweises auf die Patenterteilung: **04.11.2020**
(21) Anmeldenummer: 18734775.2
(22) Anmeldetag: 20.06.2018
(51) Int. Cl.: A01K 1/015, A01K 31/04, A01K 1/00, A01K 15/00, A01K 15/02, A01K 29/00, A01K 45/00

(54) **INFRASTRUKTURANORDNUNG FÜR EINEN NUTZTIERSTALL UND VERFAHREN ZUR BEREITSTELLUNG EINES SOLCHEN**
INFRASTRUCTURE ARRANGEMENT FOR A FARM ANIMAL SHED AND METHOD FOR PROVIDING SAME
ENSEMBLE D'INFRASTRUCTURE DESTINÉ À UN LOGEMENT POUR ANIMAL DE RENTE ET PROCÉDÉ DE FABRICATION D'UN TEL ENSEMBLE

(30) Priorität: 20.06.2017 DE 202017103642 U
(43) Veröffentlichungstag der Anmeldung: 22.04.2020
(73) Patentinhaber: Big Dutchman International GmbH, 49377 Vechta (DE)
(72) Erfinder: WESTENDORF, Dirk, 49393 Lohne (DE)
(74) Vertreter: Eisenführ Speiser
(86) Internationale Anmeldenummer: PCT/EP2018/066395
(87) Internationale Veröffentlichungsnummer: WO 2018/234374

(56) Entgegenhaltungen:
- GB-A- 2 529 166
- US-A1- 2002 049 522
- US-A1- 2015 250 137

## Beschreibung

Es wird die Priorität der deutschen Gebrauchsmusteranmeldung DE 20 2017 103 642.1, eingereicht am 20. Juni 2017, beansprucht, Die Erfindung betrifft eine Infrastrukturanordnung für einen Nutztierstall und ein Verfahren zur Bereitstellung von Infrastruktur für einen Nutztierstall.

Infrastrukturanordnungen für Nutztierställe und Verfahren zur Bereitstellung von Infrastruktur in Nutztierställe sind bekannt und umfassen beispielsweise auch autonome Stallfahrzeuge.

US 2015/0250137 A1 offenbart ein Tierfütterungsfahrzeug umfassend ein Bewegungssteuerungssystem, einen GPS-Empfänger zur Erzeugung eines ersten Satzes von Parametern einschließlich Standortinformationen, einen Näherungssensor zur Erzeugung eines zweiten Satzes von Parametern einschließlich räumlicher Informationen, einen Positionssensor zur Erzeugung eines dritten Satzes von Parametern einschließlich Bewegungsinformationen, ein Fütterungssystem einschließlich eines Fütterungssteuerungssystems zum Füttern von Tieren auf der Grundlage eines vierten Satzes von Parametern.

GB 2529166 A offenbart eine Tierkot-Sammelvorrichtung, umfassend einen Tierkot-Sammelroboter mit einem Körper, ein Antriebssystem zum Antreiben des Körpers entlang einer Bodenoberfläche, ein Navigationssystem zur Selbstführung des Körpers innerhalb einer Umgebung, in der Tierkot gesammelt werden soll, ein Erfassungssystem zum Identifizieren von Tierkot, eine Ladeanordnung zum Aufnehmen von Tierkot, eine Entladeanordnung zum Abwerfen von aufgenommenem Tierkot und ein Steuersystem zum Steuern der Operationen des Tierkot-Sammelroboters.

US 2002/0049522 A1 offenbart ein multifunktionales, mobiles Gerät, das in der Lage ist, eine Vielzahl von Aufgaben sicher, leise, ohne Verschmutzung und außer Sichtweite seines Besitzers auszuführen. Solche Aufgaben können das Rasenmähen, Düngen und Einfassen, das Staubsaugen, Wachsen und Polieren oder das Shampoonieren von Teppichen sein.

Es ist daher eine Aufgabe der vorliegenden Erfindung, eine verbesserte Infrastrukturanordnung für einen Nutztierstall und ein verbessertes Verfahren zur Bereitstellung von Infrastruktur für einen Nutztierstall bereitzustellen. Insbesondere ist es eine Aufgabe der vorliegenden Erfindung, eine Infrastrukturanordnung für einen Nutztierstall und ein Verfahren zur Bereitstellung von Infrastruktur für einen Nutztierstall bereitzustellen, welche das Tierwohl und/oder die Effizienz der Nutztierhaltung erhöhen.

Diese Aufgabe wird erfindungsgemäß gelöst durch eine Infrastrukturanordnung nach Anspruch 1.

Die hier beschriebene Infrastrukturanordnung weist ein autonomes Stallfahrzeug mit einer Steuereinheit auf. Das autonome Stallfahrzeug weist ferner eine optikfreie Positionsbestimmungsvorrichtung auf. Eine optikfreie Positionsbestimmungsvorrichtung kann auch als Flare bezeichnet werden. Die Infrastrukturanordnung umfasst ferner ein stationäres Positionsbestimmungsnetz mit mehreren optikfreien Positionsbestimmungsnetzpunkten. Diese können bei einer betriebsbereiten Anordnung der Infrastrukturanordnung in einem Nutztierstall vorzugsweise räumlich verteilt im Nutztierstall angeordnet sein. Die Steuereinheit des autonomen Stallfahrzeugs ist ausgebildet, in Abhängigkeit von Informationen der Positionsbestimmungsvorrichtung und einer Datenübertragungseinheit der Infrastrukturanordnung einen Fahrplan für das autonome Fahrzeug zu generieren.

Die Positionsbestimmung mittels der Positionsbestimmungsvorrichtung des autonomen Stallfahrzeugs und des stationären Positionsbestimmungsnetzes erfolgt vorzugsweise optikfrei. Optikfrei wird hier insbesondere verstanden als eine Positionsbestimmung, die nicht auf einem optischen Verfahren beruht, also beispielsweise keine Bilderkennung, Lichtschranken oder Ähnliches vorsieht. Unter optikfrei wird hier insbesondere auch eine Positionsbestimmung verstanden, die ohne Optikelemente, insbesondere ohne Linsen und/oder Licht arbeitet.

Das autonome Stallfahrzeug kann vorzugsweise zwei, drei oder mehrere optikfreie Positionsbestimmungsvorrichtungen aufweisen. Auf diese Weise kann eine Orientierung und/oder ein Vektor des Stallfahrzeugs auch ohne Bewegung des Stallfahrzeugs, also bei Stillstand, ermittelt werden.

Eine optikfreie Positionsbestimmung kann vorzugsweise mittels eines Flare-Netzwerks erfolgen. Eine optikfreie Positionsbestimmung kann eine Positionsbestimmung umfassen, bei der zwischen der Positionsbestimmungsvorrichtung des autonomen Stallfahrzeugs und einem oder mehreren optikfreien Positionsbestimmungsnetzpunkten eine direkte Sichtlinie existiert, die beispielsweise nicht durch Stalleinbauten behindert ist. Eine solche direkte Sichtlinie zwischen der Positionsbestimmungsvorrichtung des autonomen Stallfahrzeugs und einem oder mehreren der Positionsbestimmungsnetzpunkte des Positionsbestimmungsnetzes kann auch bei einer optikfreien Positionsbestimmung bevorzugt sein.

Vorzugsweise sind Positionsbestimmungsnetzpunkte derart angeordnet, dass zwischen der Positionsbestimmungsvorrichtung des autonomen Stallfahrzeugs und mindestens einem, vorzugsweise zwei, drei, vier oder fünf, der Positionsbestimmungsnetzpunkte des Positionsbestimmungsnetzes eine direkte Sichtlinie besteht, unabhängig davon, wo sich das Stallfahrzeug im Stall befindet.

Das autonome Stallfahrzeug weist ferner eine Ladeschnittstelle auf, um den Antrieb an einer Ladestation der Infrastrukturanordnung aufladen zu können.

Ferner weist das autonome Stallfahrzeug eine Kopplungsvorrichtung zum lösbaren Befestigen verschiedene Funktionseinheiten auf. Beispielsweise kann an der Kopplungsvorrichtung grundsätzlich eine Funktionseinheit angeordnet werden, diese aber entfernt und durch eine andere Funktionseinheit ersetzt werden. Vorzugsweise kann das autonome Stallfahrzeug mit oder ohne Funktionseinheit betrieben werden, insbesondere auch mit wechselnden Funktionseinheiten.

Das lösbare Befestigen einer Funktionseinheit an der Kopplungsvorrichtung kann auch als Bestücken bezeichnet werden. Hierfür weist die Infrastrukturanordnung mindestens eine Bestückungsstation auf, in der das autonome Stallfahrzeug mit einer Funktionseinheit gekoppelt werden kann und/oder in der das autonome Stallfahrzeug mit Arbeitsmaterialien bestückt werden kann.

Die Datenübertragungseinheit der Infrastrukturanordnung ist vorzugsweise für einen Datenaustausch mit dem autonomen Stallfahrzeug, insbesondere dessen Steuereinheit, und/oder mit einem Zentralrechner ausgebildet. Beispielsweise können über die Datenübertragungseinheit Informationen zu von dem autonomen Stallfahrzeug durchzuführenden Arbeitsaufträge von einem Zentralrechner an die Steuereinheit des autonomen Stallfahrzeugs gesendet werden. Ferner vorzugsweise können Informationen über durchgeführte Arbeitsaufträge von der Steuereinheit des autonomen Stallfahrzeugs über die Datenübertragungseinheit an einen Zentralrechner übermittelt werden.

In der Steuereinheit des autonomen Stallfahrzeugs können vorzugsweise Informationen der Positionsbestimmungsvorrichtung über die aktuelle Position des autonomen Stallfahrzeugs und Informationen der Datenübertragungseinheit beispielsweise zu geplanten Arbeitsaufträgen für das autonome Stallfahrzeug verknüpft werden, sodass ein Fahrplan für das autonome Stallfahrzeug generiert werden kann. Ein Fahrplan für das autonome Stallfahrzeug kann vorzugsweise eine geplante Route und/oder an bestimmten Positionen durchzuführende Arbeiten und/oder aufzunehmenden und/oder auszubringendes Arbeitsmaterial und/oder einzusetzende Funktionseinheiten etc. umfassen.

Auf diese Weise wird mit der hier beschriebenen Infrastrukturanordnung eine weitgehend autonome Planung für das autonome Stallfahrzeug ermöglicht. Beispielsweise kann ein Betreiber eines Nutztierstalls an einem Zentralrechner durchzuführenden Arbeitsaufträge generieren und diese über die Datenübertragungseinheit an das autonome Stallfahrzeug übermitteln. In der Steuereinheit des autonomen Stallfahrzeugs kann über die Verknüpfung mit aktuellen Positionsdaten des autonomen Stallfahrzeugs ein Fahrplan generiert werden, der es ausgehend von der aktuellen Position des Stallfahrzeugs ermöglicht, die anstehenden Arbeitsaufträge möglichst effizient abzuarbeiten. Hierzu sind in der Steuereinheit vorzugsweise geeignete Planungsalgorithmen hinterlegt. Vorzugsweise ist auch eine Synchronisation von Daten und Informationen mit einem Zentralrechner und/oder einem Netzwerk möglich.

Dies ist insbesondere geeignet für wiederkehrende Aufgaben in einem Nutztierstall, die durch das autonome Stallfahrzeug im Wesentlichen automatisiert durchgeführt werden können. Hierfür können für unterschiedliche Arbeitsaufträge verschiedene Eigenschaften, wie beispielsweise eine Ballastierung, und/oder spezielle Funktionseinheiten, etwa in Form von Werkzeug, und/oder wechselnde Arbeitsmaterialien, beispielsweise Verbrauchsmaterialien, erforderlich sein. Die Bestückungsstation und/oder das autonome Stallfahrzeug sind dabei vorzugsweise derart ausgebildet, dass eine Bestückung des autonomen Stallfahrzeugs mit unterschiedlichen Funktionseinheiten und/oder Arbeitsmaterialien autonom und/oder automatisiert erfolgt, wobei vorzugsweise kein Eingriff eines Benutzers an der Bestückungsstation erforderlich ist. Vorzugsweise beschränkt sich das Handeln eines Benutzers auf die Vorgabe eines Arbeitsauftrags, beispielsweise von einem Zentralrechner aus und/oder über eine Mensch-Maschine-Schnittstelle beispielsweise der Steuereinheit des autonomen Stallfahrzeugs. Vorzugsweise ist in dem von der Steuereinheit des autonomen Stallfahrzeugs generierten Fahrplan die Information enthalten, welche Nutzungseinheiten und/oder Arbeitsmaterialien benötigt werden, sodass diese vom autonomen Stallfahrzeug an der Bestückungsstation automatisiert und/oder autonom aufgenommen werden können.

Die Steuereinheit des autonomen Stallfahrzeugs kann an dem autonomen Stallfahrzeug selbst ausgebildet sein oder auch beabstandet von diesem angeordnet sein. Beispielsweise kann die Steuereinheit des autonomen Stallfahrzeugs ganz oder teilweise in der Datenübertragungseinheit und/oder in einem Zentralrechner angeordnet sein.

Gemäß einer bevorzugten Ausführungsform ist vorgesehen, dass die optikfreie Positionsbestimmungsvorrichtung ausgebildet ist, in Kommunikation mit dem Positionsbestimmungsnetz eine Position des autonomen Stallfahrzeugs innerhalb des Nutztierstalls zu bestimmen.

Die optikfreie Positionsbestimmungsvorrichtung ist vorzugsweise ausgebildet, mit dem stationären Positionsbestimmungsnetz, insbesondere dessen Positionsbestimmungsnetzpunkten, zusammenzuwirken, um eine Position des autonomen Stallfahrzeugs zu bestimmen. Da das autonome Stallfahrzeug mittels eines Antriebs innerhalb des Nutztierstalls beweglich ist, ist eine Positionsbestimmung des Stallfahrzeugs von Vorteil, insbesondere beispielsweise für die Navigation und/oder für eine Aufgabenplanung.

Es ist ferner bevorzugt, dass die Positionsbestimmungsvorrichtung und/oder mindestens einer der Positionsbestimmungsnetzpunkte und/oder das Positionsbestimmungsnetz eine Ultrabreitbandeinheit und/oder eine RFID-Einheit und/oder eine Funkeinheit und/oder ein Odometer und/oder eine Inertialsensorik und/oder eine Radarsensorik aufweist.

In einer bevorzugten Ausführungsform ist vorgesehen, dass ein Abstand in vertikaler Richtung zwischen mindestens einem der Positionsbestimmungsnetzpunkte und/oder mehreren oder allen Positionsbestimmungsnetzpunkten und/oder dem Positionsbestimmungsnetz und der optikfreien Positionsbestimmungsvorrichtung des autonomen Stallfahrzeugs kleiner ist als das Zehnfache einer Erstreckung in vertikaler Richtung des autonomen Stallfahrzeugs, insbesondere das Fünffache einer Erstreckung in vertikaler Richtung des autonomen Stallfahrzeugs, und/oder kleiner ist als 3m, insbesondere kleiner als 1,5m.

Eine oder mehrere dieser verschiedenen optikfreien Positionsbestimmungen sind bevorzugt, da die Navigation innerhalb eines Nutztierstalls in der Regel eine große Herausforderung darstellt, zum einen aufgrund der großen Staubbelastung innerhalb eines Nutztierstalls, welche in der Regel optikbasierte Positionsbestimmungen ausschließt oder zumindest deutlich erschwert, oder aufgrund der Stalleinbauten, wie beispielsweise Stahlgitter von Volieren für Geflügeltiere. Diese schirmen in der Regel eine Vielzahl von Frequenzbereichen ab, unter anderem übliche Frequenzbereiche für GPS (ca. 1,2 GHz oder 1,5 GHz), WLAN (2, 4 bis 2,5 GHz), etc.). Eine flächendeckende Verfügbarkeit eines Positionsbestimmungsnetzes im Stall ist somit schwierig.

Als besonders geeignet für eine Positionsbestimmung in einem Nutztierstall hat sich die Ultra-Breitband-Technologie (UWB) erwiesen, insbesondere mit einer Frequenz zwischen 3 und 11 GHz, insbesondere zwischen 3, 1 und 10,6 GHz.

Eine Erstreckung in vertikaler Richtung des autonomen Stallfahrzeugs ist vorzugsweise derart bemessen, dass das autonome Stallfahrzeug kleiner ist als eine lichte Höhe unter Stalleinbauten. Insbesondere ist es vorgesehen, dass eine Erstreckung in vertikaler Richtung des autonomen Stallfahrzeugs kleiner 450 mm, und/oder kleiner 400 mm, und/oder kleiner 350 mm, und/oder kleiner 300 mm, und/oder kleiner 250 mm, und/oder kleiner 200 mm ist.

Eine Anordnung der Positionsbestimmungsnetzpunkte des Positionsbestimmungsnetzes erfolgt vorzugsweise oberhalb einer Kopfhöhe der Nutztiere und/oder unterhalb einer Decke eines Nutztierstalls. Vorzugsweise liegen die Positionsbestimmungsnetzpunkte in vertikaler Richtung in einer oder zwei, vorzugsweise horizontalen, Ebenen. Auf diese Weise können Abschattungseffekte minimiert werden und ferner die Anzahl erforderlicher Positionsbestimmungsnetzpunkte reduziert werden. Ferner vorzugsweise sind die Positionsbestimmungsnetzpunkte in vertikaler Richtung maximal auf Höhe eines oberen Endes der Stalleinbauten, insbesondere von Geflügeltiervolieren, angeordnet. Insbesondere ist es bevorzugt, dass die Positionsbestimmungsnetzpunkte von einer Nutztierstalldecke und/oder einem oberen Ende der Nutztierstallwände in vertikaler Richtung nach unten beabstandet sind, mindestens um 1 m. Besonders bevorzugt sind die Positionsbestimmungsnetzpunkte in vertikaler Richtung maximal auf Höhe einer unteren Tieraufenthaltsfläche der Stalleinbauten, insbesondere maximal auf Höhe eines unteren Tieraufenthaltsbodens einer Geflügeltiervoliere, angeordnet. Besonders bevorzugt ist die Anordnung der Positionsbestimmungsnetzpunkte in vertikaler Richtung maximal auf Höhe einer unteren Aufenthaltsetage der Stalleinbauten und oberhalb einer Nutztierhöhe, wobei die Nutztierhöhe vorzugsweise die Höhe ist, die auf dem Stallboden befindliche Nutztiere bei gewöhnlichem Verhalten in der Regel nicht überschreiten, also beispielsweise bei Geflügeltieren deren Kopfhöhe.

Diese Ausgestaltungen sind insbesondere bei Nutztierställen für Geflügeltiere bevorzugt.

Ferner ist es bevorzugt, dass das autonome Stallfahrzeug, insbesondere die Steuerungseinheit, über eine, vorzugsweise elektronische, Karte des Nutztierstalls und/oder einer Umgebung des Nutztierstalls, beispielsweise einer gesamten Nutztierstall-Anlage verfügt. Die Genauigkeit dieser Karte kann vorzugsweise im Betrieb und/oder bei Inbetriebnahme erzeugt und/oder erhöht werden. Insbesondere kann die Karte als Grundannahme oder Eingangsinformation dienen und kann vorzugsweise während des Betriebs, insbesondere während des Fahrens des Stallfahrzeugs, validiert und/oder verbessert werden. Dies kann beispielsweise geschehen, indem das Stallfahrzeug Hindernisse erkennt, registriert und mit der Karte abgleicht. Mit einer solchen Validierungsfunktion, die vorzugsweise mit einer Hinderniserkennung und/oder einer Kollisionserkennung kombiniert ist, ergeben sich verschiedene Vorteile und Funktionen. Die Validierung und/oder Verbesserung der, vorzugsweise elektronischen, Karte kann bei Inbetriebnahme und/oder auch als sogenannte Plug-and-play Lösung direkt im Nutztierstall vor Ort erfolgen.

Beispielsweise kann ein Benutzer Beschäftigungsmaterial für die Nutztiere ausbringen. Alternativ kann auch das autonome Stallfahrzeug Beschäftigungsmaterial für die Tiere ausbringen, beispielsweise indem dafür ein entsprechender Arbeitsauftrag an das Stallfahrzeug übermittelt wurde. Nach dem Ausbringen befindet sich das Beschäftigungsmaterial üblicherweise in den Gängen eines Nutztierstalls. Der Benutzer kann die Ausbringungsposition des Beschäftigungsmaterials auf der Karte vermerken, sodass dies als temporäres Hindernis registriert wird und das autonome Stallfahrzeug diese Bereiche mit ausgebrachtem Beschäftigungsmaterial entsprechend umfahren kann, insbesondere während eines vorgegebenen Zeitraums, in dem das Beschäftigungsmaterial üblicherweise aufgebraucht und/oder zerlegt wird. Hiermit kann eine Hindernisumfahrung ermöglicht werden, die zu einer deutlichen Zeitersparnis führen kann im Vergleich zu bekannten Systemen, bei denen ein Stallfahrzeug ein Areal abfährt und bei jedem Durchgang wieder an das Hindernis fährt und eine Umfahrung durchführen muss, beispielsweise nach vorgelegten Umfahrungsmustern.

Das Vermerken von ausgebrachten Beschäftigungsmaterial oder ähnlichen auf der Karte durch einen Benutzer kann auch als Arbeitsauftrag für das autonome Stallfahrzeug gewertet werden. Beispielsweise kann ein Benutzer auf einer Karte die Position vermerken, an der das autonome Stallfahrzeug automatisiert Beschäftigungsmaterial ausbringen soll.

Ferner kann es bevorzugt sein, dass ein Benutzer die Möglichkeit hat, ein Verfallsdatum für ein Hindernis anzugeben, nachdem das (temporäre) Hindernis voraussichtlich nicht mehr existiert, beispielsweise durch Aufbrauchen und/oder durch Zerlegen von Beschäftigungsmaterial durch die Nutztiere.

Das Ausbringen von Beschäftigungsmaterial wurde hier als Beispiel zur Verdeutlichung von Funktionen und bevorzugten Ausführungsformen verwendet. Die hier beschriebenen Merkmale gelten jedoch gleichermaßen auch für andere Funktionen und Ausführungsformen.

Ferner ist es bevorzugt, dass die Infrastrukturanordnung ausgebildet ist, vorzugsweise regelmäßig, Reports mit Meldungen zum Nutztierstall zu generieren, beispielsweise mit einem Report über Hindernisse, in dem ein Benutzer dann ein entsprechendes Verfallsdatum zuordnen kann. Vorzugsweise kann eine entsprechende Klassifizierung von Hindernissen auch vor Ort im Nutztierstall geschehen, in dem der Benutzer ein mobiles Endgerät, beispielsweise ein Smartphone, bei sich trägt, das eine Karte mit verzeichneten Positionen der Hindernisse anzeigt, und über das ein Benutzer direkt weitere Informationen, wie beispielsweise Verfallsdaten, zu diesen Hindernissen hinterlegen kann. Solche Reports können beispielsweise als visuelle Zusammenfassung dienen und einem Benutzer, insbesondere regelmäßig, eine Rückmeldung über den Zustand des Nutztierstalls geben.

Ferner kann es bevorzugt sein, Statusänderungen zu Hindernissen hinterlegen zu können, insbesondere dazu, ob ein Hindernis temporär, stationär oder quasi-stationär ist. Vorzugsweise kann dies von einem Benutzer hinterlegt werden und/oder nach einem Algorithmus und/oder einer Heuristik im autonomen Stallfahrzeug hinterlegt werden. Ferner kann es bevorzugt sein, Bereiche auf der, vorzugsweise elektronischen, Karte mit bestimmten Klassifikation zu versehen, beispielsweise als Hindernis, Hotspot, oder No-Go-Area. Auf diese Weise kann ein Benutzer vorzugsweise steuern, welche Bereiche des Nutztierstalls in dem von der Steuereinheit zu generierenden Fahrplan bevorzugt, enthalten oder ausgeschlossen sein sollen. Vorzugsweise können auch diese Klassifizierungen von einem Benutzer mittels eines mobilen Endgeräts vor Ort im Nutztierstall editiert werden.

Eine Klassifizierung eines Hindernisses kann beispielsweise nach Zeit, Verfallsdatum, Größe und/oder Position erfolgen. Beispielsweise kann ein Benutzer einer bestimmten Position ein bestimmtes Problem zuordnen, wie etwa eine harte Einstreu, und dies über das mobile Endgerät auf der elektronischen Karte markieren und hierzu einen Arbeitsauftrag generieren. Vorzugsweise wird das autonome Stallfahrzeug in Abhängigkeit dieses über die Datenübertragungseinheit empfangenen Arbeitsauftrags und seiner aktuellen Position einen Fahrplan generieren, der zunächst an der Bestückungsstation das Aufnehmen einer Einstreufräse vorsieht und anschließend ein Auffräsen der harten Einstreu an der markierten Position enthält.

Vorzugsweise ist ein von der Steuereinheit des autonomen Stallfahrzeugs generierter Fahrplan veränderbar und/oder erweiterbar durch einen Benutzer, insbesondere auch bezogen auf ein spezifisches Problem. Beispielsweise kann ein Benutzer im hier beschriebenen Beispiel ein mehrmaliges Fräsen zu unterschiedlichen Zeitpunkten vorsehen.

Ferner vorzugsweise ist die Steuereinheit ausgebildet, eine statistische Auswertung über den Erfolg von Arbeitsaufträgen und/oder Vorschläge zu deren Optimierung zu generieren. Vorzugsweise kann eine solche statistische Auswertung an einem mobilen Endgerät, an einer Station im Nutztierstall, an einen Zentralrechner und/oder in einem Netzwerk angezeigt und/oder weiterverarbeitet werden, insbesondere um beispielsweise mit weiteren externen Daten verknüpft zu werden, um beispielsweise automatische Empfehlungen für bestimmte Probleme zu generieren.

Eine bevorzugte Weiterbildung zeichnet sich dadurch aus, der Antrieb ein im Wesentlichen emissionsfreier Antrieb, insbesondere ein Elektroantrieb, ist.

Eine weitere bevorzugte Weiterbildung ist gekennzeichnet durch mindestens eine Ballastierungsstation zum Anordnen von Zusatzgewichten an dem autonomen Stallfahrzeug.

Das Anordnen von Zusatzgewichten, was auch als Ballastierung bezeichnet werden kann, kann insbesondere für bestimmte Aufgaben und/oder bestimmte Einsatzgebiete des autonomen Stallfahrzeugs bevorzugt sein. Ebenso wie bei der Bestückung, erfolgt die Ballastierung vorzugsweise im Wesentlichen automatisiert in Abhängigkeit von Informationen der Positionsbestimmungsvorrichtung und insbesondere der Datenübertragungseinheit. Hier beschriebene Details zur automatisierten Bestückung gelten somit entsprechend, mutatis mutandis, auch für die vorzugsweise automatische Ballastierung.

Gemäß einer bevorzugten Ausführungsform ist vorgesehen, dass der Fahrplan eine Reihenfolge und/oder eine Verweildauer für das Anfahren von und/oder Verweilen an Arbeitsbereichen umfasst.

In einer weiteren bevorzugten Ausführungsform ist vorgesehen, dass die Datenübertragungseinheit eine Mensch-Maschine-Schnittstelle und/oder eine Datenschnittstelle umfasst, die ausgebildet ist, Informationen über von dem autonomen Stallfahrzeug durchzuführende Aufgaben zu erhalten und/oder Informationen über von dem autonomen Stallfahrzeug durchgeführten Aufgaben zu übermitteln.

Eine weitere bevorzugte Fortbildung zeichnet sich dadurch aus, dass die Datenübertragungseinheit und die Steuereinheit des autonomen Stallfahrzeugs für einen kontaktgebundenen und/oder einen leitungsgebundenen Informationsaustausch miteinander ausgebildet sind.

Die Datenübertragungseinheit und die Steuereinheit des autonomen Stallfahrzeugs können für einen kontaktungebundenen und/oder einen leitungsungebundenen Informationsaustausch miteinander ausgebildet sein.

Insbesondere ist jedoch die Ausbildung für einen kontaktgebundenen und/oder leitungsgebundenen Informationsaustausch zwischen der Datenübertragungseinheit und der Steuereinheit des autonomen Stallfahrzeugs bevorzugt. Vorzugsweise kann der Informationsaustausch zwischen der Datenübertragungseinheit und der Steuereinheit des autonomen Stallfahrzeugs an einer der beschriebenen Stationen erfolgen, wenn sich das autonome Stallfahrzeug an einer solchen Station aufhält.

Ein kontaktgebundener und/oder leitungsgebundener Informationsaustausch trägt dazu bei, eine Belastung der Nutztiere durch drahtlose Datenübertragung zu reduzieren. Insbesondere ist eine geringe Sendeleistung von im Nutzierstall befindlichen Sendern bevorzugt, um eine entsprechende Belastung der Nutztiere möglichst gering zu halten.

Beispielsweise kann das autonome Stallfahrzeug während der Abarbeitung eines Fahrplans im Wesentlichen offline sein und beispielsweise Arbeitsaufträge abarbeiten und Informationen sammeln. Sobald sich das autonome Stallfahrzeug dann an einer der hier beschriebenen Stationen befindet, die eine Datenübertragungseinheit und/oder eine Datenschnittstelle aufweist, kann das autonome Stallfahrzeug kontaktgebundenen und/oder leitungsgebundenen Informationen mit der Datenübertragungseinheit austauschen und beispielsweise neue Arbeitsaufträge herunterladen und/oder gesammelte Informationen hochladen und etwa in eine zentrale Datenbank einspielen und/oder mit Solldaten abgleichen oder ähnliches. Vorzugsweise können auf diese Weise auch Software-Updates für das autonome Stallfahrzeug erfolgen.

Ferner ist vorzugsweise vorgesehen, dass die Steuereinheit des autonomen Stallfahrzeugs ausgebildet ist, einen Rückrufauftrag von der Datenübertragungseinheit kontaktungebunden und/oder leitungsungebunden zu empfangen und/oder ein Positions'- und/oder eine Statusinformation an die Datenübertragungseinheit kontaktungebunden und/oder leitungsungebunden zu übermitteln. Ferner ist vorzugsweise vorgesehen, dass das autonome Stallfahrzeug, insbesondere die Positionsbestimmungsvorrichtung und/oder die Steuereinheit des autonomen Stallfahrzeugs, ausgebildet ist, einen Rückrufauftrag vom Positionsbestimmungsnetz kontaktungebunden und/oder leitungsungebunden zu empfangen.

Diese Ausgestaltung ist insbesondere bevorzugt, um eine vorzeitige Unterbrechung eines Fahrplans des autonomen Stallfahrzeugs herbeiführen zu können, indem das Stallfahrzeug zurückgerufen werden kann, beispielsweise an eine der hier beschriebenen Stationen oder eine andere, vorzugsweise vorbestimmte, Position.

Insbesondere wenn der Informationsaustausch zwischen der Datenübertragungseinheit und der Steuereinheit des autonomen Stallfahrzeugs nur kontaktgebundenen und/oder leitungsgebundenen möglich ist, ermöglicht die kontaktungebundene und/oder leitungsungebunden Übermittlung eines Rückrufauftrags und/oder einer Positionsinformation und/oder einer Statusinformation eine minimale Kommunikation mit dem autonomen Stallfahrzeug. Auf diese Weise kann beispielsweise festgestellt werden, wo sich das Stallfahrzeug befindet und/oder in welchem Zustand sich beispielsweise der Antrieb befindet, insbesondere hinsichtlich des Ladestands.

Vorzugsweise ist eine Kommunikation zwischen der Positionsbestimmungsvorrichtung und dem Positionsbestimmungsnetz möglich unabhängig von einer kontaktgebundenen und/oder kontaktungebundenen Kommunikation zwischen der Datenübertragungseinheit und der Steuereinheit.

Vorzugsweise ist es möglich, das autonome Stallfahrzeug zu lokalisieren ohne ein aktives Senden der eigenen Position. Beispielsweise kann dies über das Senden eines "Ping" über ein Flare-Netzwerk erfolgen, beispielsweise über die Positionsbestimmungsvorrichtung und/oder das Positionsbestimmungsnetz. Auf diese Weise kann auf die Einrichtung eines zusätzlichen Funksystems zur Ortung des autonomen Stallfahrzeugs verzichtet werden. Durch Übermittlung eines Rückrufauftrags über das Positionsbestimmungsnetz kann dieser Rückruf des Stallfahrzeugs in vorteilhafter Weise auch unabhängig von einer Datenkommunikation erfolgen.

Eine kontaktgebundene und/oder leitungsgebundene Kommunikation zwischen der Datenübertragungseinheit und der Steuereinheit ist auch bevorzugt, da insbesondere die meist aus Metall ausgebildeten Stalleinbauten und/oder die meist ebenfalls Metall enthaltenen Stahlwände die Einrichtung einer kontaktgebundenen und/oder einer leitungsungebunden Kommunikation zwischen der Datenübertragungseinheit und der Steuereinheit erschweren und aufwendig machen, sofern eine solche überhaupt im Nutzierstall flächendeckend realisierbar ist.

In einer weiteren Ausgestaltung ist insbesondere bevorzugt, dass die Steuereinheit ausgebildet ist, das autonome Stallfahrzeug einem Nutzer beabstandet folgen zu lassen.

Es ist ferner bevorzugt, dass das autonome Stallfahrzeug eine Ablagevorrichtung zur Aufnahme von zu transportierenden Gegenständen umfasst.

Die Rückruffunktion kann beispielsweise auch genutzt werden, wenn ein Benutzer den Bedarf hat, dass das autonome Stallfahrzeug dem Benutzer beabstandet folgt, also eine "Butler-Funktion" wahrnimmt. Vorzugsweise ist die Steuerungseinheit ausgebildet, einen Fahrplan des autonomen Stallfahrzeugs für eine solche Butler-Funktion zu unterbrechen und nach Beendigung der Butler-Funktion wieder aufzunehmen. In der Butler-Funktion kann das autonome Stallfahrzeug dem Benutzer folgen und dabei vorzugsweise auf seine Ablagevorrichtung Gegenstände transportieren, wie beispielsweise vom Benutzer benötigtes Werkzeug, Ersatzteile, Futter, Arbeitsmaterialien, etc..

Auf diese Weise kann das Problem adressiert werden, dass häufig ein Mangel an fachlich kompetentem Personal besteht und/oder der Arbeitsaufwand für kleine Aufgaben viel Personal bindet und/oder schwere Lasten üblicherweise nur mit Geräten wie Radlader und/oder Schubkarren transportiert werden können. In der Butler-Funktion bietet das autonome Stallfahrzeug somit für einen Benutzer eine mobile Ablagefläche und/oder einen mobilen Servicewagen und/oder einen komfortablen Lasttransport.

Um das autonome Stallfahrzeug einem Benutzer folgen zu lassen, kann beispielsweise eine Bildauswertung, und/oder eine Feldstärkemessung und/oder RFID-Technologie und/oder NFC-Technologie eingesetzt werden, insbesondere beispielsweise auch in Zusammenhang mit einem vom Benutzer mitzuführenden mobilen Endgerät.

Es ist mindestens eine Schleuse zur Anordnung zwischen zwei oder mehreren Nutztieraufenthaltsbereichen vorgesehen, wobei die Schleuse für einen Durchtritt des autonomen Stallfahrzeugs ausgebildet ist.

Eine bevorzugte Weiterbildung zeichnet sich dadurch aus, dass die mindestens eine Schleuse eine Lifteinheit zum Versetzen des autonomen Stallfahrzeugs in vertikaler Richtung umfasst, und/oder eine Reinigungsvorrichtung zum Reinigen und/oder Desinfizieren des autonomen Stallfahrzeugs oder Teilen davon umfasst, und/oder eine Ladestation zum Laden des Antriebs des autonomen Stallfahrzeugs umfasst, und/oder eine Datenschnittstelle für eine Kopplung mit der Datenübertragungseinheit umfasst.

Es ist ferner vorgesehen, dass die mindestens eine Schleuse ein Durchgangshindernis für Nutztiere umfasst.

In einem Nutztierstall sind häufig zwei oder mehrere Nutztieraufenthaltsbereiche vorgesehen. Diese können komplett voneinander getrennt sein, sodass Nutztiere zwischen den Bereichen nicht hin und her wechseln können. Alternativ können die Nutztieraufenthaltsbereiche auch einen Wechsel von einzelnen Nutztieren zulassen. Es ist eine Schleuse vorgesehen, die zwischen zwei oder mehreren Nutztieraufenthaltsbereichen angeordnet werden kann und den Durchtritt des autonomen Stallfahrzeugs erlaubt. Die Schleuse umfasst ein oder mehrere Durchgangshindernisse für Nutztiere, um den Durchtritt für Nutztiere zu sperren und/oder zu reduzieren. Ein solches Durchgangshindernis kann beispielsweise ein Lamellenvorhang sein und/oder ein Viehgitter. Ein Viehgitter kann vorzugsweise als Gitter aus parallel angeordneten Gitterelementen, wie beispielsweise Stäbe und/oder Rohre und/oder Schienen aufgebaut sein, wobei die Gitterelemente vorzugsweise aus Metall bestehen oder Metall aufweisen können. Zwischen den Gitterelementen sind vorzugsweise so große Spalte vorgesehen, dass die Nutztiere das Viehgitter nicht betreten und/oder überqueren können, ein Benutzer und/oder das autonome Stallfahrzeug das Viehgitter hingegen betreten und/oder überqueren können.

Die zwei oder mehreren Nutztieraufenthaltsbereiche können auf einer Ebene in Nutztierstall angeordnet sein und/oder über unterschiedliche Ebenen, insbesondere Etagen/Geschosse, eines Stallgebäudes verteilt sein. Die zwei oder mehreren Nutztieraufenthaltsbereiche können sich auch in verschiedenen Gebäuden einer Nutztierstall-Anlage befinden. Zwischen den Stahlgebäuden einer Nutztierstall-Anlage können sich auch außenliegende Nutztieraufenthaltsbereiche befinden. Ferner kann beispielsweise vorgesehen sein, dass ein oder mehrere Bereiche als Stallfahrzeug Bereiche ausgewiesen sind, in denen sich vorzugsweise nur das Stallfahrzeug aufhält.

Ferner ist bevorzugt, dass die Position von Schleusen auch in der, vorzugsweise elektronischen, Karte verzeichnet ist.

Vorzugsweise ist die Schleuse und/oderdas Durchgangshindernis derart ausgebildet, dass nur das autonome Stallfahrzeug die Schleuse für einen Wechsel zwischen den Nutztieraufenthaltsbereichen nutzen kann.

Insbesondere wenn sich die zwei oder mehreren Nutztieraufenthaltsbereiche auf mehreren Ebenen übereinander befinden, ist es bevorzugt, dass die Schleuse eine Lifteinheit zum Versetzen des autonomen Stallfahrzeugs in vertikaler Richtung umfasst. Die Lifteinheit kann beispielsweise als Fahrstuhl und/oder Paternoster ausgebildet sein. Die Schleuse kann beispielsweise als Lichtschleuse, etwa mittels Laser, und/oder als Wasserschleuse ausgebildet sein.

Insgesamt ist es bevorzugt, dass die Schleuse Zusatzfunktionen umfasst. Beispielsweise kann eine Reinigungsvorrichtung vorgesehen sein, die das autonome Stallfahrzeug ganz oder teilweise reinigt und/oder desinfiziert, was insbesondere bevorzugt ist, um Verschmutzungen und/oder Keime etc. nicht zwischen Nutztieraufenthaltsbereichen zu übertragen. Auf diese Weise kann auch die Biosicherheit intern wie extern und/oder die Hygiene erhöht werden.

Ferner kann eine Ladestation an der Schleuse vorgesehen sein, um die Verweildauer des autonomen Stallfahrzeugs in der Schleuse zum Laden des Antriebs zu nutzen.

Ferner ist es bevorzugt, dass eine Datenschnittstelle für eine Kopplung mit der Datenübertragungseinheit an der Schleuse vorgesehen ist, sodass die Verweildauer des autonomen Stallfahrzeugs in der Schleuse auch zur Datenübertragung genutzt werden kann.

In vorteilhafter Weise kann so ein sicherer Wechsel des autonomen Stallfahrzeugs zwischen verschiedenen Nutztieraufenthaltsbereichen realisiert werden, sodass vorzugsweise ein autonomes Stallfahrzeug mehrere Nutztieraufenthaltsbereiche bedienen kann. Beispielsweise kann ein autonomes Nutzfahrzeug auch für eine gesamte Nutztierstall-Anlage zuständig sein. Es kann auch bevorzugt sein, dass mehrere, beispielsweise unterschiedlich ausgestaltete, autonome Stallfahrzeuge für mehrere Nutztieraufenthaltsbereiche zuständig sind.

Gemäß einer bevorzugten Ausführungsform ist vorgesehen, dass die mindestens eine Ladestation und/oder die mindestens eine Bestückungsstation und/oder die mindestens eine Ballastierungsstation und/oder die mindestens eine Schleuse gegenüber einem Boden eines Tieraufenthaltsbereichs erhöht angeordnet sind und/oder ganz oder teilweise in einem von Nutztieren abgeschirmten Bereich angeordnet sind.

In einer weiteren bevorzugten Ausführungsform ist vorgesehen, dass die mindestens eine Ladestation und/oder die mindestens eine Bestückungsstation und/oder die mindestens eine Ballastierungsstation und/oder die mindestens eine Schleuse höhenveränderlich angeordnet sind und/oder eine höhenveränderlich angeordnete Schnittstelle zur Kopplung mit dem autonomen Stallfahrzeug aufweisen und/oder für eine höhenunabhängige Kopplung mit dem autonomen Stallfahrzeug ausgebildet sind.

Eine weitere bevorzugte Fortbildung zeichnet sich dadurch aus, dass die mindestens eine Ladestation und/oder die mindestens eine Bestückungsstation und/oder die mindestens eine Ballastierungsstation und/oder die mindestens eine Schleuse als eine einzige Station ausgebildet und/oder in einer Multifunktionseinheit zusammengefasst und/oder in einem Stallfahrzeugversorgungsbereich angeordnet sind.

In Nutztierställen ist häufig Einstreu ausgebracht, welche sich über den Betrieb eines Nutztierstalls und/oder über verschiedene Bereiche des Nutztierstalls hinweg in ihrer Höhe unterscheidet. Um eine zuverlässige Funktion des autonomen Stallfahrzeugs und der Infrastrukturanordnung zu gewährleisten, sind die hier beschriebenen Lösungen bevorzugt, die eine Unabhängigkeit von einer Einstreuhöhe auf dem Boden eines Tieraufenthaltsbereichs ermöglichen.

Eine erhöhte Anordnung kann beispielsweise über ein erhöhtes Plateau realisiert sein, welches für das autonome Stallfahrzeug über eine Rampe erreicht werden kann. Vorzugsweise kann der Boden des Plateaus als Rost ausgebildet sein, sodass Einstreu und/oder Verschmutzungen durch den Boden des Plateaus durchfallen können, sodass die Höhe des Plateaus im Wesentlichen gleichbleibt.

Eine höhenveränderliche Anordnung und/oder eine höhenunabhängige Kopplung ist ebenfalls bevorzugt, um eine Unabhängigkeit gegenüber einer Höhe von Einstreu und/oder sonstigem Material auf dem Boden eines Tieraufenthaltsbereichs herzustellen.

Eine weitere bevorzugte Möglichkeit besteht darin, einen ganz oder teilweise von Nutztieren abgeschirmten Bereich vorzusehen. In einem solchen Bereich ist vorzugsweise keine Einstreu oder anderes Material auf dem Boden angeordnet.

Der von Nutztieren abgeschirmte Bereich kann beispielsweise ein abgetrennter Bereich sein, der von Nutztieren nicht betreten werden kann, beispielsweise durch das Vorsehen eines Durchtritts des autonomen Stallfahrzeugs in diesem Bereich nur durch eine Schleuse mit einem Durchgangshindernis für Nutztiere.

Beispielsweise kann es bevorzugt sein, eine Multifunktionsstation und/oder einen Stallfahrzeugversorgungsbereich in dem von Nutztieren abgeschirmten Bereich anzuordnen. In dem von Nutztieren abgeschirmten Bereich kann auch ein Boden vorgesehen sein, der von Nutztieren nicht betreten werden kann und/oder von Nutztieren nur ungern betreten wird, wie beispielsweise ein Viehgitter.

Vorzugsweise kann die mindestens eine Ladestation und/oder die mindestens einer Bestückungsstation und/oder die mindestens eine Ballastierungsstation und/oder die mindestens eine Schleuse für das autonome Stallfahrzeug aus unterschiedlichen Richtungen her zugänglich sein und/oder ganz oder teilweise von einem von Nutztieren abgeschirmten Bereich umgeben sein.

Die Ladestation ist vorzugsweise ausgebildet, eine Ladung über Induktion zu ermöglichen. Das induktive Laden hat den Vorteil, dass das autonome Stallfahrzeug unabhängig von seiner räumlichen Ausrichtung geladen werden kann. Das Laden kann auch über eine Ladeantenne, die nach oben in Kontakt mit einer entsprechenden Ladestation steht, erfolgen ("Autoscooter-Prinzip").

Ferner ist es bevorzugt, die Ladestation erweitert auszubilden und in einem vorzugsweise vom autonomen Stallfahrzeug (hoch)frequentierten Bereich anzuordnen. Beispielsweise kann ein Ladebereich in einem Bereich des Tieraufenthaltsbereichs angeordnet sein, in dem das autonome Stallfahrzeug häufig und/oder regelmäßig Arbeitsaufträge zu verrichten hat, beispielsweise im Bereich zu reinigender Förderbänder. Auf diese Weise kann das autonome Stallfahrzeug während der Abarbeitung eines Arbeitsauftrags geladen werden.

In einem Stallfahrzeugversorgungsbereich können beispielsweise insbesondere die Stationen zusammengefasst sein, die eine physische Versorgung des autonomen Stallfahrzeugs ermöglichen, wie beispielsweise die mindestens eine Bestückungsstation und/oder die mindestens eine Ballastierungsstation. In einem solchen Stallfahrzeugversorgungsbereich kann beispielsweise auch eine Reinigungsstation vorgesehen sein. In einer Multifunktionsstation können vorzugsweise insbesondere solche Stationen zusammengefasst sein, welche einer virtuellen Versorgung des autonomen Stallfahrzeugs dienen, also insbesondere eine Ladestation, die vorzugsweise auch eine Datenschnittstelle für einen kontaktgebundenen und/oder leitungsgebundenen Informationsaustausch zwischen der Datenübertragungseinheit und dem autonomen Stallfahrzeug ermöglicht.

Insbesondere kann es bevorzugt sein, dass die Bestückungsstation und die Ballastierungsstation und/oder die Bestückungsstation und die Ladestation als eine einzige Station ausgebildet sind.

Vorzugsweise umfasst der Informationsaustausch auch Informationen über einen Status des autonomen Stallfahrzeugs, wie beispielsweise einen Batterieladestand und/oder eine aktuelle Auftragsliste und/oder Daten aus Sensoren, die am autonomen Stallfahrzeug angeordnet sein können.

Weitere vorteilhafte Ausführungsvarianten der zuvor beschriebenen Vorrichtung ergeben sich durch Kombination der hier erörterten bevorzugten Merkmale.

Gemäß einem weiteren Aspekt der Erfindung wird die eingangs genannte Aufgabe gelöst durch einen Nutzierstall umfassend eine zuvor beschriebene Infrastrukturanordnung.

Gemäß einem weiteren Aspekt der Erfindung wird die eingangs genannte Aufgabe gelöst durch die Verwendung einer zuvor beschriebenen Infrastrukturanordnung in einem Nutztierstall.

Gemäß einem weiteren Aspekt der Erfindung wird die eingangs genannte Aufgabe gelöst durch ein Verfahren zur Bereitstellung von Infrastruktur für einen Nutztierstall nach Anspruch 14.

Das zuvor beschriebene Verfahren und seine bevorzugten Fortbildungen weisen vorzugsweise Merkmale bzw. Verfahrensschritte auf, die sie insbesondere dafür geeignet machen, für eine zuvor beschriebene Infrastrukturanordnung und ihre Fortbildungen verwendet zu werden.

Zu den Vorteilen, Ausführungsvarianten und Ausführungsdetails dieser weiteren Aspekte der Erfindung und ihrer Fortbildungen wird auf die vorangegangene Beschreibung zu den entsprechenden Vorrichtungsmerkmalen verwiesen.

Bevorzugte Ausführungsbeispiele werden beispielhaft anhand der beiliegenden Figuren beschrieben. Es zeigen:
- Figur 1a:: eine schematische Darstellung eines Nutztierstalls mit einer beispielhaften Ausführungsform einer Infrastrukturanordnung;
- Figur 1b:: eine schematische Darstellung eines Nutztierstalls mit einer weiteren beispielhaften Ausführungsform einer Infrastrukturanordnung;
- Figur 2:: eine schematische Darstellung eines Nutztierstalls mit mehreren Nutztieraufenthaltsbereichen;
- Figur 3:: zeigt eine schematische Darstellung eines weiteren Nutztierstalls 500 mit Nutztieraufenthaltsbereichen, die in drei Etagen 521, 522, 523 übereinander angeordnet sind;
- Figur 4:: eine schematische Darstellung einer Draufsicht eines weiteren Nutztierstalls mit beispielhaften Ausgestaltungen von Ladestationen; und
- Figur 5:: eine schematische dreidimensionale Darstellung eines beispielhaften autonomen Stallfahrzeugs; und
- Figur 6:: eine schematische Darstellung des Stallfahrzeugs gemäß Figur 5 mit abgehobenen Gehäuse und Ladestation.

In den Figuren sind gleiche oder im Wesentlichen funktionsgleiche Elemente mit den gleichen Bezugszeichen versehen. Allgemeine Beschreibungen beziehen sich in der Regel auf alle Ausführungsformen, sofern Unterschiede nicht explizit angegeben sind

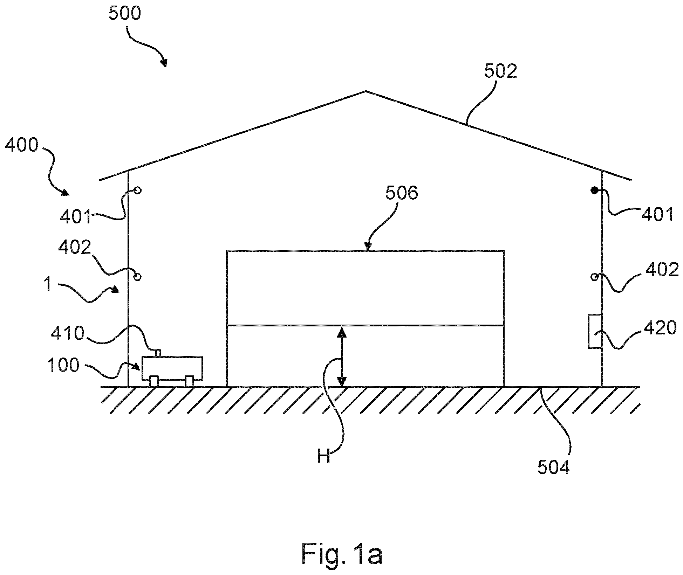

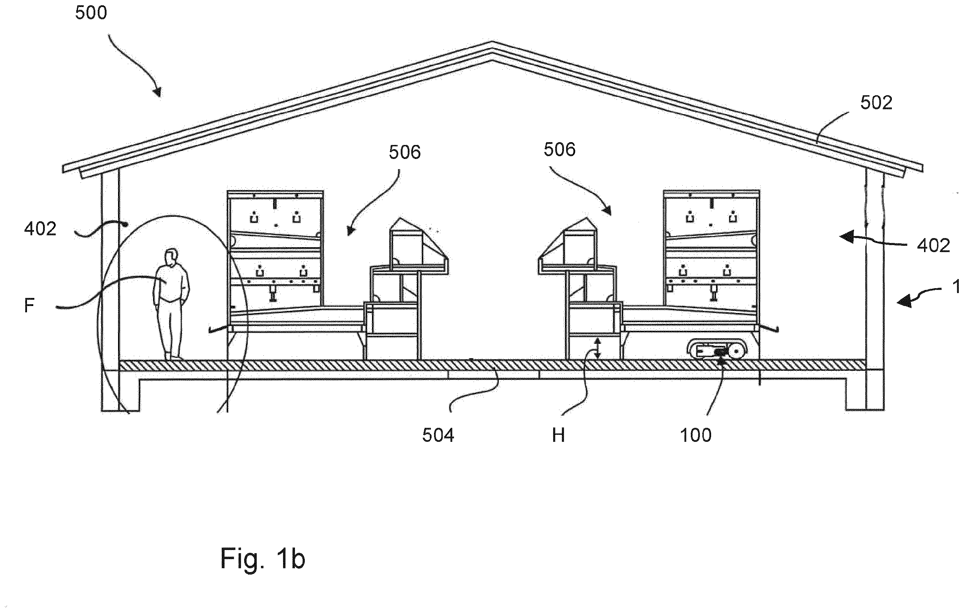

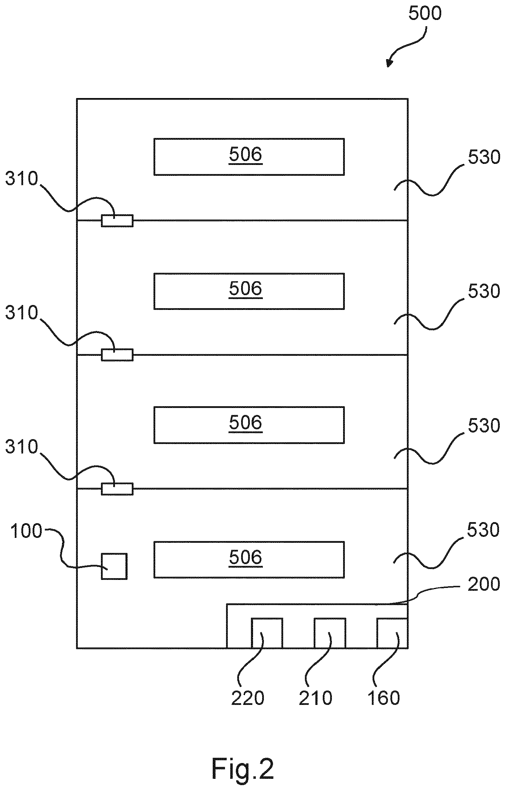

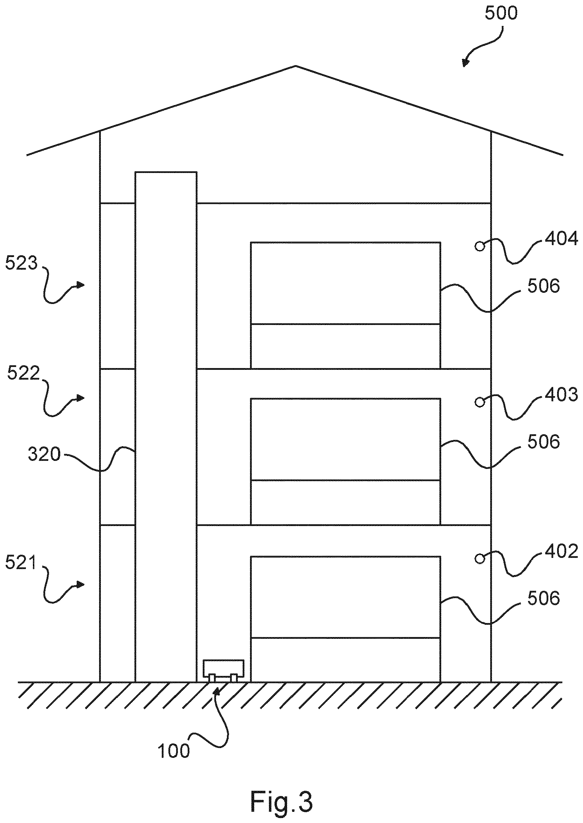

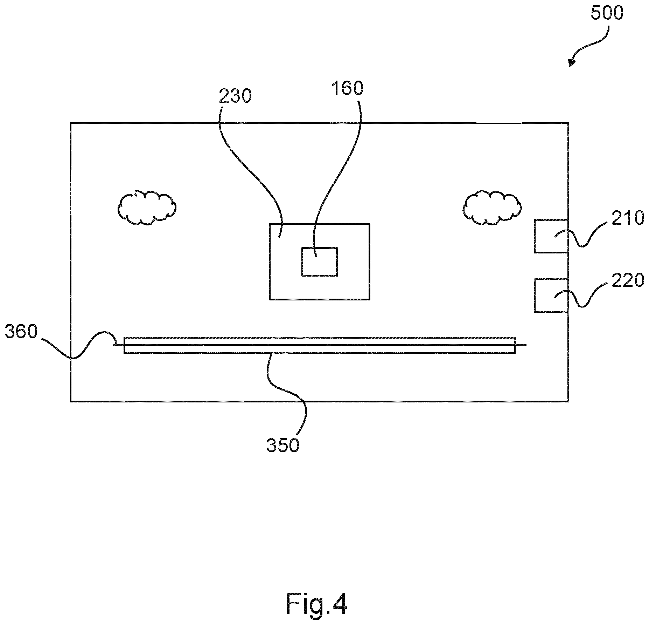

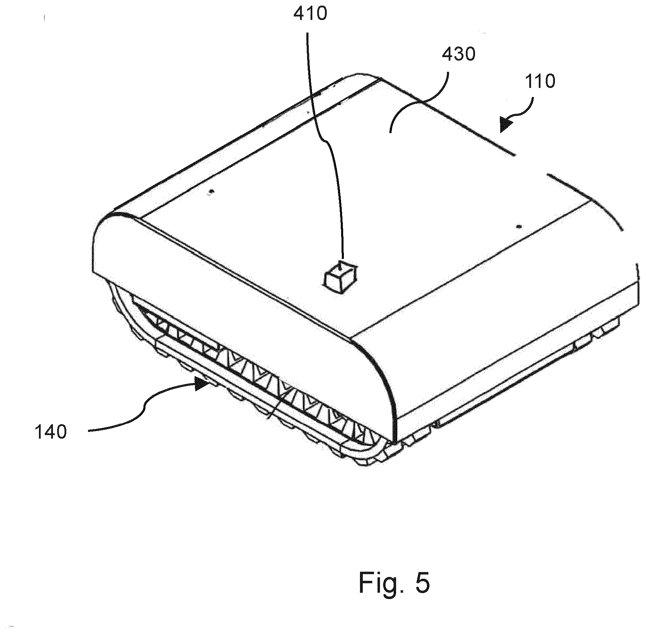

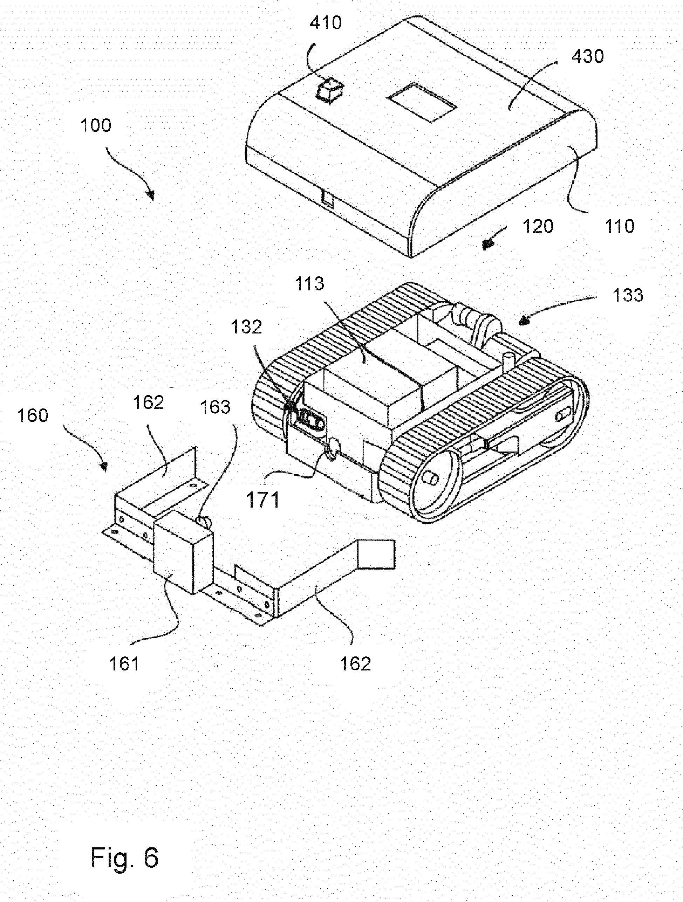

Figur 1a zeigt eine schematische Darstellung eines Nutztierstalls 500 mit einer beispielhaften Ausführungsform einer Infrastrukturanordnung 1. Auch Figur 1b zeigt eine schematische Darstellung eines Nutztierstalls 500 mit einer weiteren beispielhaften Ausführungsform einer Infrastrukturanordnung 1. Figur 2 zeigt eine schematische Darstellung eines Nutztierstalls 500 mit mehreren Nutztieraufenthaltsbereichen 530. Figur 3 zeigt eine schematische Darstellung eines weiteren Nutztierstalls 500 mit Nutztieraufenthaltsbereichen, die in drei Etagen 521, 522, 523 übereinander angeordnet sind. Figur 4 zeigt eine schematische Darstellung einer Draufsicht eines weiteren Nutztierstalls 500 mit beispielhaften Ausgestaltungen von Ladestationen. Figur 5 zeigt eine schematische dreidimensionale Darstellung eines beispielhaften autonomen Stallfahrzeugs 100. Figur 6 zeigt eine schematische Darstellung des Stallfahrzeugs 100 gemäß Figur 5 mit abgehobenen Gehäuse und Ladestation.

Die folgende Beschreibung bezieht sich im Wesentlichen auf sämtliche hier dargestellten Ausführungsformen, sofern Unterschiede nicht explizit angegeben sind.

Die Infrastrukturanordnung 1 für einen Nutztierstall 500 umfasst ein stationäres Positionsbestimmungsnetz 400 mit mehreren optikfreien Positionsbestimmungsnetzpunkten 401, 402, 403, 404. Das Positionsbestimmungsnetz 400 umfasst eine Vielzahl von Positionsbestimmungsnetzpunkten, von denen in den Figuren nur einzelne Positionsbestimmungsnetzpunkte 401, 402, 403, 404 repräsentativ dargestellt sind. Wie insbesondere in Figur 1a zu erkennen ist, liegen die Positionsbestimmungsnetzpunkte 401 auf einer ersten horizontalen Ebene und die Positionsbestimmungsnetzpunkte 402 auf einer zweiten horizontalen Ebene. Während die Positionsbestimmungsnetzpunkte 401 nahe dem Stalldach 502 angeordnet sind, befinden sich die Positionsbestimmungsnetzpunkte 402 unterhalb eines oberen Endes der Stalleinbauten 506 und gleichzeitig oberhalb einer lichten Höhe H der Stalleinbauten 506. Auch in der mehr Etagen Ausgestaltung des Nutztierstalls 500 gemäß Figur 3 sind vorzugsweise auf jeder Etage 521, 522, 523 Positionsbestimmungsnetzpunkte 402, 403, 404 vorgesehen, die jeweils oberhalb einer lichten Höhe der Stalleinbauten 506 und unterhalb eines oberen Endes der Stalleinbauten 506 angeordnet sind. Die Anordnung der Positionsbestimmungsnetzpunkte 402 ist gegenüber einer Anordnung von Positionsbestimmungsnetzpunkte 401 bevorzugt. Auf Positionsbestimmungsnetzpunkte 401 nahe dem Stalldach kann vorzugsweise verzichtet werden.

Die optikfreie Positionsbestimmungsvorrichtung 410 und das optikfreie Positionsbestimmungsnetz 400 haben den Vorteil einer zuverlässigen Positionsbestimmung im Nutztierstall 500, wobei ferner vorzugsweise während des Betriebs und/oder bei Inbetriebnahme eine, vorzugsweise elektronische, Karte eines Nutztierstalls 500 validiert und/oder korrigiert und/oder verbessert werden kann.

Diese lichte Höhe H entspricht vorzugsweise im Wesentlichen einer Höhe, die geringfügig größer ist als eine Kopfhöhe von auf dem Stallboden 503 befindlichen Nutztieren, sodass diese unter den Stalleinbauten 506 sich bewegen können.

Die Infrastrukturanordnung 1 umfasst ein autonomes Stallfahrzeug 100, welches einen Antrieb 132 zum Antreiben des Raupenfahrwerks 140 und eine Ladeschnittstelle in Form einer Ladeöffnung 171 aufweist. Die Ladeöffnung 171 kann über den Ladepin 163 der Ladebasis 161 einer Ladestation 160 mit Seitenwänden 162 gekoppelt werden, um den Antrieb 132 aufzuladen.

Das Stallfahrzeug 100 ist ferner mit einer Kopplungsvorrichtung 133 zum lösbaren Befestigen verschiedener Funktionseinheiten, wie beispielsweise einer Fräse, ausgestattet.

Das Stallfahrzeug 100 weist ein Gehäuse 110 und einem Grundkörper bzw. Chassis 120 auf. Am Stallfahrzeug 100 ist ferner eine Positionsbestimmungsvorrichtung 410 angeordnet sowie eine Steuereinheit 113.

Die Steuereinheit 113 des autonomen Stallfahrzeugs 100 ist ausgebildet, in Abhängigkeit von Informationen der Positionsbestimmungsvorrichtung 410 und einer Datenübertragungseinheit 420 (vergleiche Figur 1a) einen Fahrplan für das autonome Stallfahrzeug 100 zu generieren.

Beispielsweise kann ein Benutzer F über einen Zentralrechner Informationen über Arbeitsaufträge eingespielt haben, welche über die Datenübertragungseinheit 420 dem Stallfahrzeug 100 zur Verfügung gestellt werden zur Generierung eines Fahrplans. Die Arbeitsaufträge können sich beispielsweise darauf beziehen, in einem Bereich Beschäftigungsmaterial auszubringen und in einem Bereich harte Einstreu aufzufräsen. Hierbei kann beispielsweise der Fahrplan eine Reihenfolge und/oder eine Verweildauer in den Arbeitsbereichen und/oder vorsehen. Der Benutzer F kann die Arbeitsaufträge beispielsweise über eine Mensch-Maschine-Schnittstelle und/oder über ein mobiles Endgerät eingeben.

Der Fahrplan des autonomen Stallfahrzeugs 100 könnte somit so aussehen, zunächst zu einer Bestückungsstation 210 zu fahren und dort Beschäftigungsmaterial aufzunehmen. Der Fahrplan kann vorsehen, dass das autonome Stallfahrzeug 100 anschließend zum Bereich fährt, um das Beschäftigungsmaterial dort auszubringen. Anschließend kann das autonome Stallfahrzeug 100 gemäß Fahrplan zurückfahren zur Bestückungsstation 210 und sich mit einer Fräse als Funktionseinheit zu koppeln. Gegebenenfalls kann es bevorzugt sein, für das Auffräsen zusätzlichen Ballast in einer Ballastierungsstation 220 aufzunehmen. Der Fahrplan kann anschließend vorsehen, dass das Stallfahrzeug 100 zum Bereich fährt, um dort harte Einstreu aufzufräsen. Anschließend kann der Fahrplan vorsehen, dass das autonome Stallfahrzeug 100 den zusätzlichen Ballast in der Ballastierungsstation 220 wieder abgibt und/oder die Fräse in der Bestückungsstation 210 wieder entkoppelt.

Anschließend kann das autonome Stallfahrzeug beispielsweise eine wiederkehrende Aufgabe übernehmen, wie etwa das Reinigen von Förderbändern 350. Vorzugsweise kann in diesem Bereich eine längliche Ladestation 360 vorgesehen sein, sodass das Stallfahrzeug vorzugsweise während der Reinigung des Förderbands 350 geladen werden kann. Eine längliche Ladestation 360 kann beispielsweise für eine induktive Ladung ausgebildet sein oder einen oberhalb des Stallfahrzeugs angeordneten Leiter umfassen, an den sich das Stallfahrzeug 100 zum Laden mit einer Ladeantenne koppelt.

Alternativ oder zusätzlich kann eine Ladestation 160 vorgesehen sein, die von einem für Nutztiere abgeschirmten Bereich 230, beispielsweise in Form eines Viehgitters, umgeben ist. Alternativ oder zusätzlich kann die Ladestation 160 auch über eine Rampe auf einem erhöhten Plateau angeordnet sein, um eine unterschiedliche Höhe an Einstreu auszugleichen bzw. von dieser unabhängig zu sein.

Wie insbesondere in Figur 2 zu erkennen ist, können die Ladestation 160, die Bestückungsstation 210 und die Ballastierungsstation 220 in einem Stallfahrzeugversorgungsbereich 200 zusammengefasst sein.

Ferner sind in Figur 2 mehrere Nutztieraufenthaltsbereiche 530 zu erkennen, die auf einer Ebene angeordnet sind und in denen jeweils Stalleinbauten 506 angeordnet sind. Die Nutztieraufenthaltsbereiche 530 sind über Schleusen 310 verbunden, die einen Durchtritt des Stallfahrzeugs 100 erlauben und Nutztiere am Durchtritt hindern.

Im in Figur 3 dargestellten Beispiel eines Nutztierstalls 500 sind die Nutztieraufenthaltsbereiche auf mehreren Ebenen 521, 522, 523 angeordnet, die über eine Lifteinheit 320 verbunden sind. Das Stallfahrzeug 100 kann über die Lifteinheit 320 in allen drei Ebenen 521, 522, 523 arbeiten.

In den Schleusen 310 und oder der Lifteinheit 320 sind vorzugsweise Reinigungsvorrichtungen zum Reinigen und/oder desinfizieren des autonomen Stallfahrzeugs oder Teilen davon vorgesehen. Ferner vorzugsweise können auch die Schleusen 310 und oder die Lifteinheit 320 eine Ladestation zum Laden des Antriebs des autonomen Stallfahrzeugs und/oder eine Datenschnittstelle für eine Kopplung mit der Datenübertragungseinheit 420 umfassen. Auch die Lifteinheit 320 umfasst vorzugsweise ein Durchgangshindernis für Nutztiere, sodass die Nutztiere am Wechsel zwischen den Etagen 521, 522, 523 gehindert sind.

Vorzugsweise sind in den Schleusen 310 und/oder in den Ladestationen 160, 360 und/oder in der Bestückungsstation 210 und/oder in der Ballastierungsstation 220 Daten-Schnittstellen vorgesehen, über die das autonome Stallfahrzeug, insbesondere seine Steuereinheit 113, vorzugsweise kontaktgebunden und/oder leitungsgebunden mit der Datenübertragungseinheit 420 kommunizieren kann, um beispielsweise neue Arbeitsaufträge herunterzuladen und/oder gesammelte Daten hochzuladen.

Das Stallfahrzeug 100 kann einem Benutzer F in einer Butler-Funktion auch beabstandet folgen. Auf einer Ablagevorrichtung 430 des autonomen Stallfahrzeugs 100 können zu transportieren Gegenstände abgelegt und vom Stallfahrzeug transportiert werden.

Die Anordnung einer hier beschriebenen Infrastruktureinheit 1 in einem Nutztierstall 500 ermöglicht es, in einfacher und kostengünstiger Weise, eine Vielzahl von erforderlichen Arbeiten durchzuführen. Hierdurch kann beispielsweise auch bei Personalmangel eine Vielzahl von Arbeiten durchgeführt werden, was dem Tierwohl dient. Gleichzeitig ermöglicht die Infrastrukturanordnung eine schnelle und kostengünstige Durchführung vieler Maßnahmen, was die Effizienz der Nutztierhaltung erhöht.

## Patentansprüche

1. Infrastrukturanordnung (1) für einen Nutztierstall (500), die Infrastrukturanordnung (1) umfassend
- ein stationäres Positionsbestimmungsnetz (400) mit mehreren optikfreien Positionsbestimmungsnetzpunkten (401, 402, 403, 404),
- mindestens ein autonomes Stallfahrzeug (100), wobei das autonome Stallfahrzeug (100)
∘ einen Antrieb (132) und eine Ladeschnittstelle für den Antrieb (132),
∘ eine optikfreie Positionsbestimmungsvorrichtung (410),
∘ eine Kopplungsvorrichtung (133) zum lösbaren Befestigen verschiedener Funktionseinheiten, und
∘ eine Steuereinheit (113)
aufweist,
- mindestens eine Ladestation zum Laden des Antriebs (132) des autonomen Stallfahrzeugs (100),
- mindestens eine Bestückungsstation (210) zum Bestücken des autonomen Stallfahrzeugs (100) mit unterschiedlichen Funktionseinheiten und/oder Arbeitsmaterialien, und
- mindestens eine Datenübertragungseinheit (420),
- wobei die Steuereinheit (113) des autonomen Stallfahrzeugs (100) ausgebildet ist, in Abhängigkeit von Informationen der Positionsbestimmungsvorrichtung (410) und der Datenübertragungseinheit (420) einen Fahrplan für das autonome Stallfahrzeug (100) zu generieren,
- wobei die Infrastrukturanordnung (1) mindestens eine Schleuse (310) zur Anordnung zwischen zwei oder mehreren Nutztieraufenthaltsbereichen (530) umfasst, wobei die Schleuse (310) für einen Durchtritt des autonomen Stallfahrzeugs (100) ausgebildet ist, und
- die mindestens eine Schleuse (310) ein Durchgangshindernis für Nutztiere umfasst.

2. Infrastrukturanordnung (1) nach einem der vorhergehenden Ansprüche, wobei
die optikfreie Positionsbestimmungsvorrichtung (410) ausgebildet ist, in Kommunikation mit dem Positionsbestimmungsnetz (400) eine Position des autonomen Stallfahrzeugs (100) innerhalb des Nutztierstalls zu bestimmen, und/oder
die Positionsbestimmungsvorrichtung (410) und/oder mindestens einer der Positionsbestimmungsnetzpunkte (401, 402, 403, 404) und/oder das Positionsbestimmungsnetz (400) eine Ultrabreitbandeinheit und/oder eine RFID-Einheit und/oder eine Funkeinheit und/oder ein Odometer und/oder eine Inertialsensorik und/oder eine Radarsensorik aufweist.

3. Infrastrukturanordnung (1) nach einem der vorhergehenden Ansprüche,
wobei
ein Abstand in vertikaler Richtung zwischen mindestens einem der Positionsbestimmungsnetzpunkte (401, 402, 403, 404) und/oder mehreren oder allen Positionsbestimmungsnetzpunkten (401, 402, 403, 404) und/oder dem Positionsbestimmungsnetz (400) und der optikfreien Positionsbestimmungsvorrichtung (410) des autonomen Stallfahrzeugs (100)
- kleiner ist als das Zehnfache einer Erstreckung in vertikaler Richtung des autonomen Stallfahrzeugs (100), insbesondere das Fünffache einer Erstreckung in vertikaler Richtung des autonomen Stallfahrzeugs (100), und/oder
- kleiner ist als 3m, insbesondere kleiner als 1,5m.

4. Infrastrukturanordnung (1) nach einem der vorhergehenden Ansprüche, wobei
der Antrieb (132) ein im Wesentlichen emissionsfreier Antrieb (132), insbesondere ein Elektroantrieb, ist.

5. Infrastrukturanordnung (1) nach einem der vorhergehenden Ansprüche, umfassend
mindestens eine Ballastierungsstation (220) zum Anordnen von Zusatzgewichten an dem autonomen Stallfahrzeug (100).

6. Infrastrukturanordnung (1) nach einem der vorhergehenden Ansprüche, wobei
der Fahrplan eine Reihenfolge und/oder eine Verweildauer für das Anfahren von und/oder Verweilen an Arbeitsbereichen umfasst.

7. Infrastrukturanordnung (1) nach einem der vorhergehenden Ansprüche, wobei
- die Datenübertragungseinheit (420) eine Mensch-Maschine-Schnittstelle und/oder eine Datenschnittstelle umfasst, die ausgebildet ist, Informationen über von dem autonomen Stallfahrzeug (100) durchzuführende Aufgaben zu erhalten und/oder Informationen über von dem autonomen Stallfahrzeug (100) durchgeführten Aufgaben zu übermitteln, und/oder
- die Datenübertragungseinheit (420) und die Steuereinheit (113) des autonomen Stallfahrzeugs (100) für einen kontaktgebundenen und/oder einen leitungsgebundenen Informationsaustausch miteinander ausgebildet sind, und/oder
- die Steuereinheit(113) des autonomen Stallfahrzeugs (100) ausgebildet ist, einen Rückrufauftrag von der Datenübertragungseinheit (420) kontaktungebunden und/oder leitungsungebunden zu empfangen und/oder ein Positions- und/oder eine Statusinformation an die Datenübertragungseinheit (420) kontaktungebunden und/oder leitungsungebunden zu übermitteln, und/oder
- die Steuereinheit (113) ausgebildet ist, das autonome Stallfahrzeug (100) einem Nutzer beabstandet folgen zu lassen, und/oder
- das autonome Stallfahrzeug (100) eine Ablagevorrichtung (430) zur Aufnahme von zu transportierenden Gegenständen umfasst.

8. Infrastrukturanordnung (1) nach einem der vorhergehenden Ansprüche, wobei die mindestens eine Schleuse (310)
- eine Lifteinheit zum Versetzen des autonomen Stallfahrzeugs(100) in vertikaler Richtung umfasst, und/oder
- eine Reinigungsvorrichtung zum Reinigen und/oder Desinfizieren des autonomen Stallfahrzeugs (100) oder Teilen davon umfasst, und/oder
- eine Ladestation zum Laden des Antriebs (132) des autonomen Stallfahrzeugs (100) umfasst, und/oder
- eine Datenschnittstelle für eine Kopplung mit der Datenübertragungseinheit (420) umfasst.

9. Infrastrukturanordnung (1) nach einem der vorhergehenden Ansprüche, wobei
die mindestens eine Ladestation und/oder die mindestens eine Bestückungsstation (210) und/oder die mindestens eine Ballastierungsstation (220) und/oder die mindestens eine Schleuse (310) gegenüber einem Boden eines Tieraufenthaltsbereichs erhöht angeordnet sind und/oder ganz oder teilweise in einem von Nutztieren abgeschirmten Bereich angeordnet sind.

10. Infrastrukturanordnung (1) nach einem der vorhergehenden Ansprüche, wobei
die mindestens eine Ladestation und/oder die mindestens eine Bestückungsstation (210) und/oder die mindestens eine Ballastierungsstation (220) und/oder die mindestens eine Schleuse (310) höhenveränderlich angeordnet sind und/oder eine höhenveränderlich angeordnete Schnittstelle zur Kopplung mit dem autonomen Stallfahrzeug (100) aufweisen und/oder für eine höhenunabhängige Kopplung mit dem autonomen Stallfahrzeug (100) ausgebildet sind.

11. Infrastrukturanordnung (1) nach einem der vorhergehenden Ansprüche, wobei
die mindestens eine Ladestation und/oder die mindestens eine Bestückungsstation (210) und/oder die mindestens eine Ballastierungsstation (220) und/oder die mindestens eine Schleuse (310) als eine einzige Station ausgebildet und/oder in einer Multifunktionseinheit zusammengefasst und/oder in einem Stallfahrzeugversorgungsbereich (200) angeordnet sind.

12. Nutztierstall (500) umfassend eine Infrastrukturanordnung (1) nach einem der vorhergehenden Ansprüche.

13. Verwendung einer Infrastrukturanordnung (1) nach einem der vorhergehenden Ansprüche 1-11 in einem Nutztierstall (500).

14. Verfahren zur Bereitstellung von Infrastruktur für einen Nutztierstall (500), umfassend
- Bestimmen einer Position mindestens eines autonomen Stallfahrzeugs (100) mittels einer optikfreien Positionsbestimmungsvorrichtung (410) des Stallfahrzeugs (100) und eines stationären Positionsbestimmungsnetzes (400) mit mehreren optikfreien Positionsbestimmungsnetzpunkten (401, 402, 403, 404),
- Antreiben des mindestens einen autonomen Stallfahrzeugs (100),
- Laden des mindestens einen autonomen Stallfahrzeugs (100) an einer Ladestation,
- Bestücken des autonomen Stallfahrzeugs (100) mit unterschiedlichen Funktionseinheiten an einer Kopplungsvorrichtung (133) des mindestens einen autonomen Stallfahrzeugs (100) und/oder Bestücken des autonomen Stallfahrzeugs mit unterschiedlichen Arbeitsmaterialien,
- Generieren eines Fahrplans für das autonome Stallfahrzeug (100) in Abhängigkeit von Informationen der Positionsbestimmungsvorrichtung (410) und einer Datenübertragungseinheit (420) in einer Steuereinheit (113) des Stallfahrzeugs (100),
- Vorsehen mindestens einer Schleuse (310) zur Anordnung zwischen zwei oder mehreren Nutztieraufenthaltsbereichen (530), wobei die Schleuse (310) für einen Durchtritt des autonomen Stallfahrzeugs (100) ausgebildet ist, und die mindestens eine Schleuse (310) ein Durchgangshindernis für Nutztiere umfasst.

## Claims

1. An infrastructure arrangement (1) for a farm animal shed (500), said infrastructure arrangement (1) comprising
- a stationary position determination network (400) having multiple optics-free position determination network points (401,402, 403, 404),
- at least one autonomous shed vehicle (100), wherein the autonomous shed vehicle (100) has
o a drive (132) and a charging interface for the drive (132),
o an optics-free position determination apparatus (410),
o a coupling apparatus (133) for detachably securing various functional units, and
o a control unit (113),
- at least one charging station for charging the drive (132) of the autonomous shed vehicle (100),
- at least one fitting station (210) for fitting the autonomous shed vehicle (100) with various functional units and/or work materials, and
- at least one data transmission unit (420),
- wherein the control unit (113) of the autonomous shed vehicle (100) is designed to take information of the position determination apparatus (410) and of the data transmission unit (420) as a basis for generating a schedule for the autonomous shed vehicle (100),
- wherein the infrastructure arrangement (1) comprises at least one lock (310) for arrangement between two or more farm animal residence areas (530), wherein the lock (310) is designed for passage of the autonomous shed vehicle (100), and
- the at least one lock (310) comprises a transit obstacle for farm animals.

2. The infrastructure arrangement (1) as claimed in one of the preceding claims, wherein
the optics-free position determination apparatus (410) is designed to communicate with the position determination network (400) to determine a position of the autonomous shed vehicle (100) inside the farm animal shed, and/or
the position determination apparatus (410) and/or at least one of the position determination network points (401,402, 403, 404) and/or the position determination network (400) has an ultrawideband unit and/or an RFID unit and/or a radio unit and/or an odometer and/or an inertial sensor system and/or a radar sensor system.

3. The infrastructure arrangement (1) as claimed in either of the preceding claims, wherein
a distance in the vertical direction between at least one of the position determination network points (401,402, 403, 404) and/or multiple or all position determination network points (401,402, 403, 404) and/or the position determination network (400) and the optics-free position determination apparatus (410) of the autonomous shed vehicle (100)
- is less than ten times an extent in the vertical direction of the autonomous shed vehicle (100), in particular five times an extent in the vertical direction of the autonomous shed vehicle (100), and/or
- is less than 3 m, in particular less than 1.5 m.

4. The infrastructure arrangement (1) as claimed in one of the preceding claims, wherein
the drive (132) is a substantially emission-free drive (132), in particular an electric drive.

5. The infrastructure arrangement (1) as claimed in one of the preceding claims, comprising
at least one ballasting station (220) for arranging additional weights on the autonomous shed vehicle (10).

6. The infrastructure arrangement (1) as claimed in one of the preceding claims, wherein
the schedule comprises a sequence and/or a length of stay for traveling to and/or staying at work areas.

7. The infrastructure arrangement (1) as claimed in one of the preceding claims, wherein
- the data transmission unit (420) comprises a human-machine interface and/or a data interface that is designed to obtain information about tasks to be performed by the autonomous shed vehicle (100) and/or to convey information about tasks performed by the autonomous shed vehicle (100), and/or
- the data transmission unit (420) and the control unit (113) of the autonomous shed vehicle (100) are designed for contact-based and/or line-based exchange of information with one another, and/or
- the control unit (113) of the autonomous shed vehicle (100) is designed to receive a callback order from the data transmission unit (420) in noncontact-based and/or non-line-based fashion and/or to convey position and/or status information to the data transmission unit (420) in noncontact-based and/or non-line-based fashion, and/or
- the control unit (113) is designed to have the autonomous shed vehicle (100) follow a user at a distance, and/or
- the autonomous shed vehicle (100) comprises a tray apparatus (430) for holding items to be transported.

8. The infrastructure arrangement (1) as claimed in one of the preceding claims, wherein the at least one lock (310)
- comprises a lift unit for moving the autonomous shed vehicle (100) in the vertical direction, and/or
- comprises a cleaning apparatus for cleaning and/or disinfecting the autonomous shed vehicle (100) or parts thereof, and/or
- comprises a charging station for charging the drive (132) of the autonomous shed vehicle (100), and/or
- comprises a data interface for coupling to the data transmission unit (420).

9. The infrastructure arrangement (1) as claimed in one of the preceding claims, wherein
the at least one charging station and/or the at least one fitting station (210) and/or the at least one ballasting station (220) and/or the at least one lock (310) are arranged at a higher level than a floor of an animal residence area and/or are arranged entirely or partly in an area shielded from farm animals.

10. The infrastructure arrangement (1) as claimed in one of the preceding claims, wherein
the at least one charging station and/or the at least one fitting station (210) and/or the at least one ballasting station (220) and/or the at least one lock (310) are arranged at variable levels and/or have an interface arranged at variable levels for coupling to the autonomous shed vehicle (100) and/or are designed for level-independent coupling to the autonomous shed vehicle (100).

11. The infrastructure arrangement (1) as claimed in one of the preceding claims, wherein
the at least one charging station and/or the at least one fitting station (210) and/or the at least one ballasting station (220) and/or the at least one lock (310) are in the form of a single station and/or combined in a multifunction unit and/or arranged in a shed vehicle supply area (200).

12. A farm animal shed (500) comprising an infrastructure arrangement (1) as claimed in one of the preceding claims.

13. The use of an infrastructure arrangement (1) as claimed in one of the preceding claims 1-11 in a farm animal shed (500).

14. A method for providing infrastructure for a farm animal shed (500), comprising
- determining a position of at least one autonomous shed vehicle (100) by means of an optics-free position determination apparatus (410) of the shed vehicle (100) and a stationary position determination network (400) having multiple optics-free position determination network points (401,402, 403, 404),
- driving the at least one autonomous shed vehicle (100),
- charging the at least one autonomous shed vehicle (100) at a charging station,
- fitting the autonomous shed vehicle (100) with various functional units at a coupling apparatus (133) of the at least one autonomous shed vehicle (100) and/or fitting the autonomous shed vehicle (100) with various work materials,
- generating a schedule for the autonomous shed vehicle (100) on the basis of information of the position determination apparatus (410) and a data transmission unit (420) in a control unit (113) of the shed vehicle (100),
- providing at least one lock (310) for arrangement between two or more farm animal residence areas (530), wherein the lock (310) is designed for passage of the autonomous shed vehicle (100), and the at least one lock (310) comprises a transit obstacle for farm animals.

## Revendications

1. Ensemble d'infrastructure (1) pour un bâtiment destiné à abriter des animaux de rente (500), lequel ensemble d'infrastructure (1) comprenant
- un réseau de définition de position (400) stationnaire avec plusieurs points de réseau de définition de position (401, 402, 403, 404) sans optique,
- au moins un véhicule de bâtiment destiné à abriter des animaux (100) autonome, dans lequel le véhicule de bâtiment destiné à abriter des animaux (100) autonome présente
-- un entraînement (132) et une interface de charge pour l'entraînement (132),
-- un dispositif de définition de position (410) sans optique,
-- un dispositif de couplage (133) servant à fixer de manière amovible différentes unités fonctionnelles, et
-- une unité de commande (113),
- au moins une station de charge servant à charger l'entraînement (132) du véhicule de bâtiment destiné à abriter des animaux (100) autonome,
- au moins une station d'équipement (210) servant à équiper le véhicule de bâtiment destiné à abriter des animaux (100) autonome avec des unités fonctionnelles et/ou des matériaux de fonctionnement différents, et
- au moins une unité de transmission de données (420),
- dans lequel l'unité de commande (113) du véhicule de bâtiment destiné à abriter des animaux (100) autonome est réalisée pour générer en fonction d'informations du dispositif de définition de position (410) et de l'unité de transmission de données (420) une feuille de route pour le véhicule de bâtiment destiné à abriter des animaux (100) autonome,
- dans lequel l'ensemble d'infrastructure (1) comprend au moins un sas (310) destiné à être disposé entre deux ou plusieurs zones de séjour d'animaux de rente (530), dans lequel le sas (310) est réalisé pour un passage du véhicule de bâtiment destiné à abriter des animaux (100) autonome, et
- l'au moins un sas (310) comprend un obstacle de passage pour des animaux de rente.

2. Ensemble d'infrastructure (1) selon l'une quelconque des revendications précédentes, dans lequel
le dispositif de définition de position (410) sans optique est réalisé pour définir en communication avec le réseau de définition de position (400) une position du véhicule de bâtiment destiné à abriter des animaux (100) autonome à l'intérieur du bâtiment destiné à abriter des animaux de rente,
et/ou
le dispositif de définition de position (410) et/ou au moins un des points de réseau de définition de position (401, 402, 403, 404) et/ou le réseau de définition de position (400) présentent une unité à bande ultra large et/ou une unité RFID et/ou une unité radio et/ou un odomètre et/ou un capteur inertiel et/ou un capteur radar.

3. Ensemble d'infrastructure (1) selon l'une quelconque des revendications précédentes,
dans lequel un espacement dans le sens vertical entre au moins un des points de réseau de définition de position (401, 402, 403, 404) et/ou plusieurs ou tous les points de réseau de définition de position (401, 402, 403, 404) et/ou le réseau de définition de position (400) et le dispositif de définition de position (410) sans optique du véhicule de bâtiment destiné à abriter des animaux (100) autonome
- est inférieur à 10 fois une extension dans un sens vertical du véhicule de bâtiment destiné à abriter des animaux (100) autonome, en particulier à 5 fois une extension dans un sens vertical du véhicule de bâtiment destiné à abriter des animaux (100) autonome, et/ou
- est inférieur à 3 m, en particulier est inférieur à 1,5 m.

4. Ensemble d'infrastructure (1) selon l'une quelconque des revendications précédentes,
dans lequel
l'entraînement (132) est un entraînement (132) sensiblement sans émission, en particulier un entraînement électrique.

5. Ensemble d'infrastructure (1) selon l'une quelconque des revendications précédentes,
comprenant au moins une station de lestage (220) servant à disposer des poids supplémentaires au niveau du véhicule destiné à abriter des animaux (100) autonome.

6. Ensemble d'infrastructure (1) selon l'une quelconque des revendications précédentes,
dans lequel
la feuille de route comprend un ordre et/ou une durée de séjour pour la traversée de zones de travail et/ou pour le séjour au niveau de zones de travail.

7. Ensemble d'infrastructure (1) selon l'une quelconque des revendications précédentes,
dans lequel
- l'unité de transmission de données (420) comprend une interface homme-machine et/ou une interface de données, qui est réalisée pour obtenir des informations sur des tâches à exécuter par le véhicule de bâtiment destiné à abriter des animaux (100) autonome et/ou pour transmettre des informations sur des tâches exécutées par le véhicule de bâtiment destiné à abriter des animaux (100) autonome, et/ou
- l'unité de transmission de données (420) et l'unité de commande (113) du véhicule de bâtiment destiné à abriter des animaux (100) autonome sont réalisées l'une avec l'autre en vue d'un échange d'informations par contact et/ou filaire, et/ou
- l'unité de commande (113) du véhicule de bâtiment destiné à abriter des animaux (100) autonome est réalisée pour recevoir par contact et/ou de manière filaire un ordre de rappel de l'unité de transmission de données (420) et/ou pour transmettre par contact et/ou de manière filaire une information de position et/ou de statut à l'unité de transmission de données (420), et/ou
- l'unité de commande (113) est réalisée pour que le véhicule de bâtiment destiné à abriter des animaux (100) autonome suive à distance un utilisateur, et/ou
- le véhicule de bâtiment destiné à abriter des animaux (100) autonome comprend un dispositif de dépôt (430) servant à recevoir des objets à transporter.

8. Ensemble d'infrastructure (1) selon l'une quelconque des revendications précédentes,
dans lequel l'au moins un sas (310)
- comprend une unité de levage servant à amener le véhicule de bâtiment destiné à abriter des animaux (100) autonome dans une direction verticale, et/ou
- comprend un dispositif de nettoyage servant à nettoyer et/ou à désinfecter le véhicule de bâtiment destiné à abriter des animaux (100) autonome ou des parties de celui-ci, et/ou
- comprend une station de charge servant à charger l'entraînement (132) du véhicule de bâtiment destiné à abriter des animaux (100) autonome, et/ou
- comprend une interface de données pour un couplage à l'unité de transmission de données (420).

9. Ensemble d'infrastructure (1) selon l'une quelconque des revendications précédentes,
dans lequel
l'au moins une station de charge et/ou l'au moins une station d'équipement (210) et/ou l'au moins une station de lestage (220) et/ou l'au moins un sas (310) sont disposés de manière élevée par rapport à un sol de la zone de séjour des animaux et/ou sont disposés en totalité ou en partie dans une zone protégée des animaux de rente.

10. Ensemble d'infrastructure (1) selon l'une quelconque des revendications précédentes,
dans lequel
l'au moins une station de charge et/ou l'au moins une station d'équipement (210) et/ou l'au moins une station de lestage (220) et/ou l'au moins un sas (310) sont disposés de manière variable en hauteur et/ou présentent une interface disposée de manière variable en hauteur destinée à être couplée au véhicule de bâtiment destiné à abriter des animaux (100) autonome et/ou sont réalisés pour un couplage indépendamment de la hauteur au véhicule de bâtiment destiné à abriter des animaux (100) autonome.

11. Ensemble d'infrastructure (1) selon l'une quelconque des revendications précédentes,
dans lequel
l'au moins une station de charge et/ou l'au moins une station d'équipement (210) et/ou l'au moins une station de lestage (220) et/ou l'au moins un sas (310) sont réalisés en tant qu'une station unique et/ou sont regroupés dans une unité multifonctionnelle et/ou sont disposés dans une zone d'alimentation de véhicule de bâtiment destiné à abriter des animaux (200).

12. Bâtiment destiné à abriter des animaux de rente (500) comprenant un ensemble d'infrastructure (1) selon l'une quelconque des revendications précédentes.

13. Utilisation d'un ensemble d'infrastructure (1) selon l'une quelconque des revendications précédentes 1 à 11 dans un bâtiment destiné à abriter des animaux de rente (500).

14. Procédé servant à fournir l'infrastructure pour un bâtiment destiné à abriter des animaux de rente (500),
comprenant
- la définition d'une position d'au moins un véhicule de bâtiment destiné à abriter des animaux (100) autonome au moyen d'un dispositif de définition de position (410) sans optique du véhicule de bâtiment destiné à abriter des animaux (100) et d'un réseau de définition de position (400) stationnaire avec plusieurs points de réseau de définition de position (401, 402, 403, 404) sans optique,
- l'entraînement de l'au moins un véhicule de bâtiment destiné à abriter des animaux (100) autonome,
- la charge de l'au moins un véhicule de bâtiment destiné à abriter des animaux (100) autonome au niveau d'une station de charge,
- l'équipement du véhicule de bâtiment destiné à abriter des animaux (100) autonome avec des unités fonctionnelles différentes au niveau d'un dispositif de couplage (133) de l'au moins un véhicule de bâtiment destiné à abriter des animaux (100) autonome et/ou l'équipement du véhicule de bâtiment destiné à abriter des animaux autonome avec des matériaux de travail différents,
- la génération d'une feuille de route pour le véhicule de bâtiment destiné à abriter des animaux (100) autonome en fonction d'informations du dispositif de définition de position (410) et d'une unité de transmission de données (420) dans une unité de commande (113) du véhicule de bâtiment destiné à abriter des animaux (100),
- la prévision d'au moins un sas (310) destiné à être disposé entre deux ou plusieurs zones de séjour d'animaux de rente (530), dans lequel le sas (310) est réalisé pour un passage du véhicule de bâtiment destiné à abriter des animaux (100) autonome, et l'au moins un sas (310) comprend un obstacle de passage pour des animaux de rente.
